# EUROPEAN PATENT APPLICATION

(11) **EP 3 757 511 A1**
(43) Date of publication of application: **30.12.2020**
(21) Application number: 19757717.4
(22) Date of filing: 20.02.2019
(51) Int. Cl.: G01B 21/32

(54) **METHOD FOR ESTIMATING THE IN VIVO DIMENSIONS OF A SURGICAL SPECIMEN FROM THE EX VIVO DIMENSIONS THEREOF**

(30) Priority: 21.02.2018 ES 201830152
(71) Applicant: Servicio Andaluz de Salud, 41071 Sevilla (ES)
(72) Inventor: BLASCO MORENTE, Gonzalo, 41071 Sevilla (ES); TERCEDOR SÁNCHEZ, Jesús, 41071 Sevilla (ES); ARIAS SANTIAGO, Salvador, 41071 Sevilla (ES)
(74) Representative: ABG Intellectual Property Law, S.L.
(86) International application number: PCT/ES2019/070093
(87) International publication number: WO 2019/162549

(57) **Abstract**

The invention describes a method for estimating the shrinkage of a surgical specimen excised from a patient using data obtained *ex vivo* hours after the operation. The method comprises the following steps: measuring the length and width of the specimen (LSS_{EV}^{m}, WSS_{EV}^{m}) excised from a patient after a process of fixing in formalin; and estimating the length and width of the surgical specimen (LSS_{IV}^{e}, WSS_{IV}^{e}) before excision by means of the formulas: LSS_{IV}^{e} = LSS_{EV}^{m} x (1+LCF^{SS}); and WSS_{IV}^{e} = WSS_{EV}^{m} x (1+WCF^{SS}), wherein LCF^{SS} is a length-correction factor and WCF^{SS} is a width-correction factor, both dependent on the location in the body of the patient from whom the surgical specimen was excised. Preferred embodiments of the method also make it possible to determine the swelling of the surgical defect and the shrinkage of the surgical and histological margins.

## Description

### OBJECT OF THE INVENTION

The present invention belongs to the field of dermatology, and more particularly to methods for the surgical excision of a skin lesion, such as a melanoma.

The object of the present invention is a method which allows the dimensions of a surgical specimen in the *in vivo* state before excision to be determined, based on the dimensions of said surgical specimen measured in an *ex vivo* state after excision and after a process of fixing the surgical specimen.

Another object of the present invention is to determine the dimensions of the surgical defect left in the skin of the patient after excising the surgical specimen due to the swelling of the skin, based on the dimensions of the surgical specimen measured in the *in vivo* state before excision.

Another object of the present invention is to determine the surgical margin in the *in vivo* state before excision, i.e., the distance between the visible outer border of a lesion and the outer border of the surgical specimen, based on the surgical margin measured in an *ex vivo* state after excision and after a process of fixing the surgical specimen.

Another object of the present invention is to determine the histological margin in the *in vivo* state before excision, i.e., the distance between the real outer border of a lesion and the outer border of the surgical specimen, based on the histological margin measured in an *ex vivo* state after excision and after a process of fixing the surgical specimen.

### BACKGROUND OF THE INVENTION

The treatment of certain skin lesions, such as discoloring or moles suspected of being cancerous for example, comprises excising them by means of a relatively simple surgical intervention. During said intervention, a surgical specimen that is essentially planar and has a size larger than the lesion itself is excised, as it is necessary to respect certain surgical margins around same. For example, depending on the type of lesion, the surgical margins could be around one centimeter or the like. The surgical specimen is then subjected to a fixing treatment which prevents it from deteriorating, usually by means of immersion thereof in formalin for a certain time, and sent to a pathologist to perform a biopsy confirming the initial diagnosis.

A common problem during this procedure consists of the lack of consistency between the different dimensions of the surgical specimen taken into account by the surgeon at the time of the intervention and the same dimensions measured at a later time by the pathologist while performing the biopsy. Indeed, from the very moment the surgical specimen is excised from the body of the patient, a shrinkage effect causing a reduction of the volume thereof is known to occur. As a result, the surgical margins measured by the pathologist are usually smaller than the actual surgical margins the surgeon took into account during the intervention. Histological margins are also reduced.

These discrepancies may cause a number of drawbacks. For example, the decision may be made to perform a second surgical intervention to increase the surgical or histological margins without it actually being necessary. Legal-medical issues with real repercussions in judicial proceedings may also arise. Indeed, in the event of a lawsuit lodged by the patient or his or her family members as a result of a negative progression of the patient after the excision, the surgeon has no way to prove that he or she complied with the required surgical or histological margins. The only available data is often the surgical or histological margins measured hours after the surgical intervention by the pathologist in the shrunken specimen, margins which are logically smaller than those that were respected during the operation.

Another known problem is related to the expansion of the surgical defect created by excising the surgical specimen due to the swelling of the surrounding skin. Indeed, it is known that the skin around the gap left by the surgical specimen in the skin of the patient after excision tends to shrink, which causes an increase in the size of said gap. If there are substantial differences between the size and shape of the planned wound and the surgical defect after excising the surgical specimen, the closing technique cannot be predicted with certainty before excision. These differences have an important clinical relevance in reconstructive surgery techniques, for example when the decision is made to do a skin flap.

There is currently no solution for these problems, and surgeons and pathologists must improvise solutions to the problems that are considered.

### DESCRIPTION OF THE INVENTION

The present invention solves the aforementioned problems as a result of a method which allows the original *in vivo* dimensions of a surgical specimen to be determined from the *ex vivo* dimensions of said surgical specimen hours after excision and already subjected to a process of fixing. The pathologist can thereby know the surgical margin the surgeon left during excision and thus be certain that the necessary distances were respected. Furthermore, this also allows the surgeon to demonstrate that he or she complied with the required surgical margins.

### Definitions

Some of the terms used herein are defined below:
Surgical specimen: Portion of tissue of the patient excised during surgical intervention. The surgical specimen usually adopts an approximately elliptical elongated shape, referred to as *"buttonhole",* which can be characterized based on the length and width dimensions thereof.
Lesion: Portion of damaged tissue to be excised from the patient. The lesion is within the surgical specimen, essentially at the center thereof.
Surgical margin: Minimum distance between the visible outer border of the lesion and the outer border of the surgical specimen for the purpose of ensuring that after excision no injured cells remain in the skin of the patient.
Histological margin: Minimum distance between the real outer border of the lesion and the outer border of the surgical specimen with the purpose of ensuring that after excision no injured cells remain in the skin of the patient. The real border of the lesion extends beyond the visible border *in vivo,* and the position thereof can only be determined *ex vivo* in a laboratory after excision.
Width and length: Conventionally, surgical specimens excised in this context have a shape referred to as a "buttonhole", i.e., an essentially elliptical planar shape or the like characterized by its length (the longest dimension thereof) and width (the shortest dimension thereof). Both surgical specimens and surgical defects are herein considered to have an essentially elliptical planar shape. Therefore, references herein to the width and length of the different parameters are assumed to refer respectively to the direction of the length of the surgical specimen or lesion (longitudinal direction) and to the direction of the width of the surgical specimen or lesion (transverse direction).
Surgeon: Medical professional who performs the surgical intervention of excising the surgical specimen from the skin of the patient. Before performing the excision, the surgeon determines through *in vivo* measurements the dimensions of the surgical specimen ensuring certain established surgical margins.
Pathologist: Medical professional who performs a subsequent analysis of the surgical specimen to determine the characteristics of the lesion. For example, if the lesion is suspected of being a melanoma, the pathologist performs a biopsy of the surgical specimen to confirm or refute this diagnosis. The pathologist performs his or her analysis hours or days after the extraction of the surgical specimen. Accordingly, after excision by the surgeon, the surgical specimen is subjected to a fixing treatment, usually with formalin, to prevent it from degrading.
Surgical defect: *"Gap"* left by the surgical specimen in the skin of the patient after excision.

### Notation

The subscript "IV" will generally be used herein to refer to an *in vivo* state, prior to the surgical intervention in which the surgical specimen is excised, and the subscript "EV" will generally be used herein to refer to an *ex vivo* state after excision and a process of fixing the surgical specimen, usually in 10% formalin for 24 hours.

The superscript "e" will generally be used herein to refer to a magnitude estimated according to any of the methods described herein, and the superscript "m" will generally be used herein to refer to a magnitude physically measured by a surgeon or pathologist, whichever is appropriate.

The following symbols are used:
- LSS_{IV}^{e}: Estimated length of the surgical specimen *in vivo.*
- WSS_{IV}^{e}: Estimated width of the surgical specimen *in vivo.*
- LSS_{EV}^{m}: Measured length of the surgical specimen *ex vivo* (after excision and fixing).
- WSS_{EV}^{m}: Measured width of the surgical specimen *ex vivo* (after excision and fixing).
- LCF^{SS}: Length-correction factor of the surgical specimen.
- WCF^{SS}: Width-correction factor of the surgical specimen.
- LSD^{e}: Estimated length of the surgical defect.
- WSD^{e}: Estimated width of the surgical defect.
- LSS_{IV}^{m}: Measured length of the surgical specimen *in vivo.*
- WSS_{IV}^{m}: Measured width of the surgical specimen *in vivo.*
- LCF^{SD}: Length-correction factor of the surgical defect.
- WCF^{SD}: Width-correction factor of the surgical defect.
- LSM_{IV}^{e}: Estimated length of the surgical margin *in vivo.*
- WSM_{IV}^{e}: Estimated width of the surgical margin *in vivo.*
- LL_{EV}^{m}: Measured length of the lesion *ex vivo* (after excision and fixing).
- WL_{EV}^{m}: Measured width of the lesion *ex vivo* (after excision and fixing).
- LCF^{L}: Length-correction factor of the lesion.
- WCF^{L}: Width-correction factor of the lesion.
- LHM_{IV}^{e}: Estimated length of the histological margin *in vivo.*
- WHM_{IV}^{e}: Estimated width of the histological margin *in vivo.*
- LHM_{IV}^{m}: Measured length of the histological margin *ex vivo* (after excision and fixing).
- WHM_{IV}^{m}: Measured width of the histological margin *ex vivo* (after excision and fixing).

### Magnitude of shrinkage of the surgical specimen

As mentioned above, surgical specimens of human tissue are known to shrink after excision. This fact has been attributed to the retraction properties of surgical specimens and to the action of the formalin used for the preservation thereof. However, although there are some studies in this regard, the results shed little clarification in terms of the magnitude of shrinkage (see, for example, the article by Zuber TJ entitled "Fusiform excision", Am Fam Physician 2003; 6:1539-44).

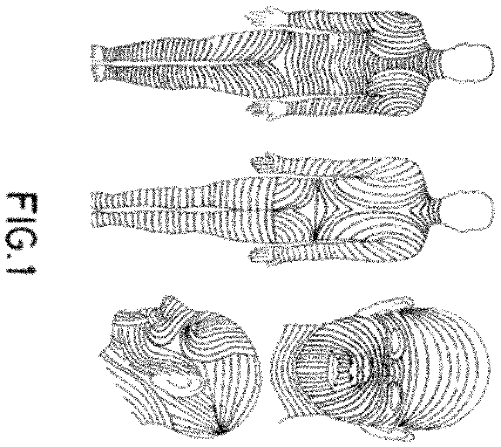

Furthermore, the biomechanical characteristics of the skin are known to not be uniform in all parts of the body, as is clearly shown by means of the so-called Langer's lines, known today as relaxed skin tension lines (see Figure 1). Said tension is primarily induced by the architecture of the collagen framework and of the elastic fibers making up the deep reticular dermis (see the article by Dumas P et al. entitled "Study of skin retraction applied to the treatment of skin tumors. Mapping of the human body", Ann Chir Plast Esthet 2012; 57:118-24).

Having said that, the inventors of the present application have performed a comprehensive study of the magnitude of shrinkage of the surgical specimen based on the original position of said surgical specimen in the skin of the patient. To that end, 433 fusiform excisions of human skin were performed, 244 of which were from men and 189 from women, with a mean age of 63.87 years. In summary, the mean body mass index was 27.71 kg/m² (corresponding to overweight), the mean abdominal girth was 109.38 cm (corresponding to figures above what is recommended both in men, whose normal value is ≤ 102 cm, and in women, whose normal value normal is ≤ 88 cm), the most common phototype was III, followed by IV and I and II; 83% of the patients from whom the SS were obtained did not smoke; 67.82% did not drink alcohol; 15.7% suffered diabetes mellitus; 2.2% suffered an inflammatory skin condition; and 2.8% were undergoing treatment with topical or oral corticoids on a regular basis; 72.6% had suffered chronic exposition to the sun; and 70.1% presented actinic damage. 51.1% of the patients from whom the surgical specimens were obtained performed light physical activity; 36.3% maintained a sedentary lifestyle; and 12.6% performed moderate or intense physical activity.

The location of the surgical specimens was, from more to less common:
1. Cheek, chin, or lip
2. Nose
3. Frontal region
4. Posterior torso
5. Lower limb
6. Scalp
7. Upper limb
8. Anterior torso
9. Cervical region
10. Soles or palms and auricle

The most common diagnosis was basal cell carcinoma (55.2%), followed by melanocytic tumors (16.4%), which included melanocytic nevi and melanomas, spindle-cell carcinoma (15%) and other diagnoses (13.4%), being included in this group infundibular cysts, dermatofibromas, neurofibromas, eccrine poromas, angiokeratomas, acquired digital fibromas, and atypical fibroxanthomas.

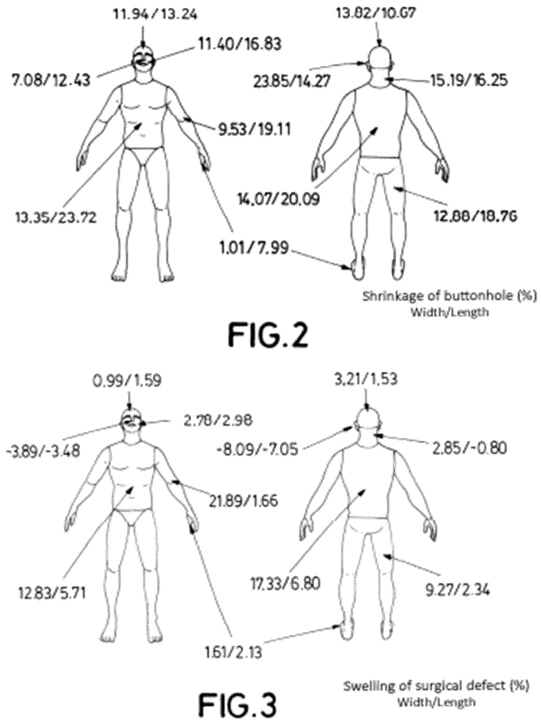

It was found that the width and length of the lesion and of the surgical specimens significantly decreased between the *in vivo* moment, right before excision, and the *ex vivo* moment, after 24 hours of fixing in 10% buffered formalin. The mean shrinkage of the width was 13.32% for the lesion and 11.60% for the surgical specimen, and mean shrinkage of the length was 14.17% for the lesion and 16.16% for the surgical specimen. 72.75% of the total shrinkage of the width of the lesion and 90.0% of the width of the surgical specimen, as well as 69.02% of the length of the lesion and 90.28% of the length of the surgical specimen were observed between the *in vivo* measurements, before excision, and *ex vivo* measurements, right after excision. A significant decrease in the width and length of the lesion and the surgical specimen between the *ex vivo* measurement, right after excision, and the measurement after 24 hours of fixing in 10% buffered formalin, was furthermore observed. Figure 2 graphically shows a summary of the data relative to shrinkage of the surgical specimen obtained in the study.

Based on the data of this study relative to the magnitude of shrinkage based on the area of the body of the patient, the inventors of the present application have developed a method for estimating the magnitude of shrinkage of a surgical specimen excised from the skin of a patient. The surgical specimen is considered to have an essentially planar shape defined by the length and width dimensions thereof. The method comprises the following steps:
1) Measuring the length and width of the surgical specimen in the *ex vivo* state (LSS_{EV}^{m}, WSS_{EV}^{m}) excised from a patient after a process of fixing said surgical specimen.
2) Estimating the length and width of the surgical specimen in the *in vivo* state (LSS_{IV}^{e}, WSS_{IV}^{e}) before excision by means of the following formulas: ${{LSS}_{IV}}^{e} = {{LSS}_{EV}}^{m} \times \left(1+{LCF}^{SS}\right)$ (1) ${{WSS}_{IV}}^{e} = {{WSS}_{IV}}^{m} \times \left(1+{WCF}^{SS}\right)$ (2) wherein:
   LCF^{SS} is a length-correction factor of the specimen.
   WCF^{SS} is a width-correction factor of the specimen.

The value of correction factors LCF^{SS} and WCF^{SS} depends on the location in the body of the patient from whom the surgical specimen was excised according to the following table. Furthermore, the value of correction factors LCF^{SS} and WCF^{SS} may vary by 10% with respect to the values of the table:

**Table 1: Surgical specimen width and length reduction percentages**

| **Region of the body** | **WCF^{SS}** | **Region of the body** | **LCF^{SS}** |
|---|---|---|---|
| Auricle | 0.2385 | Anterior torso | 0.2372 |
| Cervical region | 0.1519 | Posterior torso | 0.2009 |
| Posterior torso | 0.1407 | Upper limb | 0.1911 |
| Scalp | 0.1382 | Lower limb | 0.1876 |
| Anterior torso | 0.1335 | Cheek, chin, and lip | 0.1683 |
| Lower limb | 0.1288 | Cervical region | 0.1625 |
| Frontal region | 0.1194 | Auricle | 0.1427 |
| Cheek, chin, and lip | 0.1140 | Frontal region | 0.1324 |
| Upper limb | 0.0953 | Nose | 0.1243 |
| Nose | 0.0708 | Scalp | 0.1067 |
| Palm or sole | 0.0101 | Palm or sole | 0.0799 |

Therefore, this novel method allows the pathologist to determine what the size of the surgical specimen was right at the time of the excision. To that end, the pathologist must only measure the dimensions of the surgical specimen available, even when it has shrunk after several hours of fixing, for example, in 10% buffered formalin. The application of the preceding formulas will allow the pathologist to estimate the original size *in vivo* of the surgical specimen in a simple manner.

### Magnitude of swelling of the surgical defect

Surgical defects are also known to shrink after excision. This phenomenon has also been previously studied, although the known papers do not shed any light on the problems described above (see, for example, the article by Hudson-Peacock MJ, et al. entitled "Relation between size of skin excision, wound, and specimen", J AM Acad Dermatol. 1995; 32: 1010-5).

The study described above also took into account the swelling of the surgical defect. It was determined that, on average, the surgical defect was 5.15% wider and 1.77% longer compared with the *in vivo* measurement of said surgical defect. Figure 3 graphically shows a summary of the data relative to shrinkage of the surgical specimen obtained in the study.

Based on the data from the study regarding swelling of the surgical effect in the different areas of the body of the patient, the inventors of the present application have developed a preferred embodiment of the preceding method which further allows the magnitude of the swelling of the cutaneous surgical defect caused by the excision of the surgical specimen to be estimated. In this preferred embodiment, the method of the invention further comprises the following steps:
3) Measuring the length and width of the surgical specimen in the *in vivo* state (LSS_{IV}^{m}, WSS_{IV}^{m}) before being excised from the patient.
4) Estimating the length and width of the surgical defect (LSD, WSD) due to the swelling of the skin of the patient after excising the surgical specimen by means of the following formulas: $LSD = {{LSS}_{IV}}^{m} \times \left(1+{LCF}^{SD}\right)$ (3) $WSD = {{WSS}_{IV}}^{m} \times \left(1+{WCF}^{SD}\right)$ (4) wherein:
   LCF^{SD} is a length-correction factor of the surgical defect.
   WCF^{SD} is a width-correction factor of the surgical defect.

The value of correction factors LCF^{SD} and WCF^{SD} depends on the location of the surgical specimen in the body of the patient according to the following table. Furthermore, the value of correction factors LCF^{SD} and WCF^{SD} may vary by 10% with respect to the values of the table:

**Table 2: Surgical defect width and length increase percentages**

| **Region of the body** | **WCF^{SD}** | **Region of the body** | **LCF^{SD}** |
|---|---|---|---|
| Upper limb | 0.2189 | Posterior torso | 0.0680 |
| Posterior torso | 0.1733 | Anterior torso | 0.0571 |
| Anterior torso | 0.1283 | Cheek, chin, and lip | 0.0298 |
| Lower limb | 0.0927 | Lower limb | 0.0234 |
| Scalp | 0.0321 | Palm or sole | 0.0213 |
| Cervical region | 0.0285 | Upper limb | 0.0166 |
| Cheek, chin, and lip | 0.0278 | Frontal region | 0.0159 |
| Palm or sole | 0.0161 | Scalp | 0.0153 |
| Frontal region | 0.0099 | Cervical region | -0.0080 |
| Nose | -0.0389 | Nose | -0.0348 |
| Auricle | -0.0809 | Auricle | -0.0705 |

Therefore, this novel preferred embodiment of the method of the invention allows the surgeon to know beforehand what the real dimensions of the surgical defect that excision of the surgical specimen will cause will be. To that end, the surgeon must simply measure the dimensions of the surgical specimen *in vivo,* before excision. The application of the preceding formulas will allow the surgeon to estimate the size the surgical defect will have in a simple manner.

### Magnitude of shrinkage of the surgical margins

As a result of the shrinkage sustained by the surgical specimen as a whole, a decrease of the surgical margins takes place. This decrease occurs due to the combination of the shrinkage of the surgical specimen and the shrinkage of the lesion which, as demonstrated by the mentioned study, do not take place to the same extent.

Based on the data from the study relative to the shrinkage of the lesion in the different areas of the body of the patient, the inventors of the present application have developed a preferred embodiment of the preceding method which further allows the magnitude of the surgical margin respected during excision of said surgical specimen between the outer border of a lesion present in the surgical specimen and the outer border of said surgical specimen to be estimated. In this preferred embodiment, the method of the invention further comprises the following steps:
5) Measuring the length and width of the lesion in the *ex vivo* state (LL_{EV}^{m}, WL_{EV}^{m}) after a process of fixing the surgical specimen in formalin.
6) Estimating the length and width of the surgical margin in the *in vivo* state (LSM_{IV}^{e}, WSM_{IV}^{e}) respected during excision of the surgical specimen by means of the following formulas: ${{LSM}_{IV}}^{e} = \left[{{LSS}_{EV}}^{m}\times \left(1+{LCF}^{SS}\right)-{{LL}_{EV}}^{m}\times \left(1+{LCF}^{L}\right)\right] / 2$ (5) ${{MSM}_{IV}}^{e} = \left[{{WSS}_{EV}}^{m}\times \left(1+{WCF}^{SS}\right)-{{WL}_{EV}}^{m}\times \left(1+{WCF}^{L}\right)\right] / 2$ (6) wherein
   LCF^{L} is a length-correction factor of the lesion.
   WCF^{L} is a width-correction factor of the lesion.

The value of the correction factors LCF^{L} and WCF^{L} depends on the location of the surgical specimen in the body of the patient according to the following table. Furthermore, the value of the correction factors LCF^{L} and WCF^{L} may vary by 10% with respect to the values of the table:

**Table 3: Lesion width and length increase percentages**

| **Region of the body** | **WCF^{L}** | **Region of the body** | **LCF^{L}** |
|---|---|---|---|
| Cervical region | 0.2301 | Anterior torso | 0.2225 |
| Frontal region | 0.1968 | Frontal region | 0.1642 |
| Palm or sole | 0.1519 | Lower limb | 0.1519 |
| Lower limb | 0.1385 | Nose | 0.1501 |
| Anterior torso | 0.1349 | Posterior torso | 0.1418 |
| Cheek, chin, and lip | 0.1256 | Upper limb | 0.1412 |
| Nose | 0.1252 | Cervical region | 0.1329 |
| Posterior torso | 0.1210 | Palm or sole | 0.1262 |
| Auricle | 0.0958 | Scalp | 0.1229 |
| Upper limb | 0.0746 | Auricle | 0.1205 |
| Scalp | 0.0507 | Cheek, chin, and lip | 0.1130 |

Therefore, this novel embodiment of the invention allows the pathologist to determine what the dimensions of the surgical margins were right at the time of the excision. To that end, the pathologist must simply measure the dimensions both of the lesion and of the surgical specimen available, even when it has shrunk after several hours of fixing, for example in 10% buffered formalin. The application of the preceding formulas will allow the pathologist to know what the surgical margins were in the surgical specimen *in vivo* in a simple manner.

### Magnitude of shrinkage of the histological margins

As a result of the shrinkage sustained by the surgical specimen as a whole, a decrease of the histological margins also takes place. As in the case of the surgical margins, the shrinkage of the histological margins occurs due to the combination of the shrinkage of the surgical specimen and the shrinkage of the lesion.

The histological margins are the most clinically relevant margins, because they are what really reflect the distance that must be respected between the outer border of the extracted surgical specimen and the real outer border of the lesion. However, the histological margins are not visible *in vivo* to the naked eye, and there is currently no reliable method for determining them. For that reason, the only available data is that relative to the histological margins *ex vivo* after the process of fixing which, as mentioned, are shrunken and therefore do not precisely reflect the surgical margins that were really respected during the surgical intervention.

The inventors of the present application have developed a preferred embodiment of the preceding method which further allows the magnitude of the histological margin respected during excision of said surgical specimen between the real outer border of the lesion present in the surgical specimen and the outer border of said surgical specimen to be estimated. In this preferred embodiment, the method of the invention further comprises the following steps:
7) Estimating the length and width of the histological margin in the *in vivo* state (LHM_{IV}^{e}, WHM_{IV}^{e}) respected during excision of the surgical specimen by means of the following formulas: ${{WHM}_{iv}}^{e} = \left(2\times {{WSM}_{iv}}^{e}\times {{WHM}_{ev}}^{m}\right) / \left({{WSS}_{ev}}^{m}-{{WL}_{ev}}^{m}\right)$ (7) ${{LHM}_{iv}}^{e} = \left(2\times {{LSM}_{iv}}^{e}\times {{LHM}_{ev}}^{m}\right) / \left({{LSS}_{ev}}^{m}-{{LL}_{ev}}^{m}\right)$ (8) wherein
   WHMₑᵥ^{m} is the measured length of the histological margin *ex vivo.*
   LHMₑᵥ^{m} is the measured width of the histological margin *ex vivo.*
   WLₑᵥ^{m} is the measured width of the lesion *ex vivo.*
   LLₑᵥ^{m} is the measured length of the lesion *ex vivo.*

The underlying geometric justification of these formulas for estimating histological margins is briefly described below. This brief justification will be given taking into account the dimension relative to the width of the histological margin, although it is evident that it would be done in the same way for the dimension relative to the length of the histological margin.

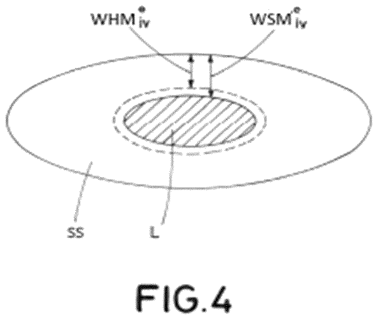

Figure 4 schematically shows a surgical specimen (SS) assumed to be in the *in vivo* state and in the center of which there is a lesion (L). The lesion (L) has a visible apparent border limiting the striped area, and a non-visible real border depicted by means of a discontinuous line outside of the visible border of the lesion (L). The distance between the upper border of the surgical specimen (SS) and the visible apparent upper border of the lesion (L) is the width of the surgical margin *in vivo,* which was estimated as (WSMᵢᵥ^{e}) according to formula (6) above. The distance between the upper border of the surgical specimen (SS) and the non-visible real upper border of the lesion (L) is the width of the histological margin *in vivo* (WHMᵢᵥ^{e}) to be estimated.

Therefore, to estimate the histological margins *in vivo* it is herein assumed that the magnitude of shrinkage sustained by the histological margins from the value thereof *in vivo* to the value thereof *ex vivo* after the process of fixing is the same as the shrinkage sustained by the surgical margins from the value thereof *in vivo* to the value thereof *ex vivo* after the process of fixing. This can mathematically be expressed as: ${{WSM}_{ev}}^{m} / {{WSM}_{iv}}^{e} = {{WHM}_{ev}}^{m} / {{WHM}_{iv}}^{e}$ (9)

It is therefore deduced that: ${{WHM}_{iv}}^{e} = \left({{WHM}_{ev}}^{m}\times {{WSM}_{iv}}^{e}\right) / {{WSM}_{ev}}^{m}$ (10)

The width of the surgical margin *ex vivo* after fixing can simply be measured by the pathologist. Alternatively, this parameter can be deduced from the respective measurements of the surgical specimen and of the lesion in the *ex vivo* state after fixing, because it is evident that the width of the surgical margin will be half of the difference between the width of the surgical specimen and the width of the lesion: ${{WSM}_{ev}}^{m} = \left({{SW}_{ev}}^{m}-{{LW}_{ev}}^{m}\right) / 2$ (11)

Finally, by introducing equation (11) in equation (10), equation (7) mentioned above is obtained: ${{WHM}_{iv}}^{e} = \left(2\times {{WHM}_{ev}}^{m}\times {{WSM}_{iv}}^{e}\right) / \left({{SW}_{ev}}^{m}-{{LW}_{ev}}^{m}\right)$

Therefore, this novel embodiment of the invention allows the pathologist to determine what the dimensions of the real histological margins were right at the time of the excision. To that end, the pathologist only needs the data already obtained beforehand in addition to the histological margins *ex vivo* after fixing, which he or she can readily measure.

### BRIEF DESCRIPTION OF THE DRAWINGS

Figure 1 schematically shows the position of the relaxed skin tension lines in a human body.
Figure 2 shows a body map of the mean overall shrinkage of the width and length of the surgical specimen based on the location.
Figure 3 shows a body map of the mean swelling of the width and length of the surgical defect based on the location.
Figure 4 shows an illustrative schematic diagram of obtaining the formula for estimating the histological margins *in vivo* prior to excision.

### PREFERRED EMBODIMENT OF THE INVENTION

Some particular examples of the application of the method of the present invention are described below.

### Example 1: Estimate of the swelling of a surgical defect

The surgeon finely marks with a skin marker an oval-shaped surgical specimen 2.5 cm wide by 7.5 cm long on an upper limb of the patient. Before performing the excision, the surgeon uses formulas (3) and (4) to estimate what the dimensions of the surgical defect that will remain after extraction will be: $LSD = {{LSS}_{IV}}^{m} \times \left(1+{LCF}^{D}\right)$ $WSD = {{WSS}_{IV}}^{m} \times \left(1+{WCF}^{D}\right)$

The surgeon knows the measured length of the surgical specimen *in vivo* (LSS_{IV}^{m} = 7.5 cm) and the measured width of the surgical specimen *in vivo* (WSS_{IV}^{m} = 2.5 cm). Looking at Table 3, the surgeon also obtains the value of correction factors relative to the swelling of a surgical defect for an upper limb: WCF^{SD} = 0.2189 and LCF^{SD} = 0.0680. By entering these values in formulas (3) and (4), the surgeon determines that: LSD = 7.62 cm and WSD = 3.05 cm. Knowing these measurements will help the surgeon to better plan closing the surgical defect after excising the surgical specimen.

### Example 2: Estimate of the dimensions of a surgical specimen and of the surgical and histological margins

A pathologist receives a surgical specimen for analysis. The surgical specimen consists of a scalp specimen in which there is a melanoma. According to the applicable international protocols, the minimum histological margin must be 1 cm. However, the pathologist measures the histological margins and the width of the histological margin measured turns out to be 0.85 cm. Therefore, doubts arise concerning whether it is necessary to perform another procedure on the patient.

In view of this situation, the pathologist decides to use the formulas described herein to estimate what the dimensions of the specimen, of the lesion, and of the histological margins were in the *in vivo* state before the surgical intervention. To that end, starting from the surgical specimen available, which is in the *ex vivo* state and has already been subjected to the fixing method, the pathologist takes measurements of the specimen, of the lesion, and of the histological margins. The measurements are:
Measured width of the surgical specimen *ex vivo* (WSSₑᵥ^{m}) = 2.6 cm
Measured length of the surgical specimen *ex vivo* (LSSₑᵥ^{m}) = 8.1 cm
Measured width of the lesion *ex vivo* (WLₑᵥ^{m}) = 0.95 cm
Measured length of the lesion *ex vivo* (LLₑᵥ^{m}) = 1.8 cm
Measured width of the histological margin *ex vivo* (WHMₑᵥ^{m}) = 0.85 cm
Measured length of the histological margin *ex vivo* (LHMₑᵥ^{m}) = 2.1 cm

The pathologist then uses the preceding formulas to estimate the dimensions of the surgical specimen, the lesion, and the histological margin *in vivo* before excision. First, the pathologist applies formulas (1) and (2) to estimate the dimensions of the surgical specimen *in vivo*: ${{LSS}_{IV}}^{e} = {{LSS}_{EV}}^{m} \times \left(1+{LCF}^{SS}\right)$ ${{WSS}_{IV}}^{e} = {{WSS}_{IV}}^{m} \times \left(1+{WCF}^{SS}\right)$

Table 1 indicates the value of correction factors of the dimensions of the surgical specimen for the scalp: (LCF^{SS} = 0.1067; WCF^{SS} = 0.1382). By applying the formulas, an estimate of the length of the surgical specimen *in vivo* (LSS_{IV}^{e} = 8.96 cm) and an estimate of the width of the surgical specimen *in vivo* (WSS_{IV}^{e} = 2.96 cm) are obtained.

Then the pathologist applies formulas (5) and (6) to estimate the dimensions of the surgical margins *in vivo*: ${{LSM}_{IV}}^{e} = \left[{{LSS}_{EV}}^{m}\times \left(1+{LCF}^{SS}\right)-{{LL}_{EV}}^{m}\times \left(1+{LCF}^{L}\right)\right] / 2$ ${{WSM}_{IV}}^{e} = \left[{{WSS}_{EV}}^{m}\times \left(1+{WCF}^{SS}\right)-{{WL}_{EV}}^{m}\times \left(1+{WCF}^{L}\right)\right] / 2$

Table 3 indicates the value of correction factors of the lesion for the scalp: (LCF^{L} = 0.1229; WCF^{L} = 0.0507). By applying the formulas, an estimate of the length of the surgical margin *in vivo* (LSM_{IV}^{e} = 3.47 cm) and an estimate of the width of the surgical margin *in vivo* (WSM_{IV}^{e} = 0.98 cm) are obtained.

Lastly, the pathologist applies formulas (7) and (8) to estimate the dimensions of the histological margins *in vivo*: ${{WHM}_{iv}}^{e} = \left(2\times {{LSM}_{iv}}^{e}\times {{WHM}_{ev}}^{m}\right) / \left({{WSS}_{ev}}^{m}-{{WL}_{ev}}^{m}\right)$ ${{LHM}_{iv}}^{e} = \left(2\times {{LSM}_{iv}}^{e}\times {{LHM}_{ev}}^{m}\right) / \left({{LP}_{ev}}^{m}-{{LL}_{ev}}^{m}\right)$

By applying these formulas, an estimate of the length of the histological margin *in vivo* (WHMᵢᵥ^{e} = 1.01 cm) and an estimate of the width of the histological margin *in vivo* (LHMᵢᵥ^{e} = 2.31 cm) are obtained.

It is thus determined that the surgeon respected the surgical histological margins *in vivo* required under the protocols, and it is therefore not necessary to perform another procedure.

### Example 3: Estimate of the dimensions of a surgical specimen and of the surgical and histological margins

A patient has suffered metastasis due to an epidermoid carcinoma located in the posterior torso and the patient's family is considering filing a lawsuit against the hospital because excision was performed with a lateral histological margin of 0.435 cm when international protocols establish that an excision with 0.5 cm should be performed. The judge has the following measurements from the anatomic pathology report:
Measured width of the surgical specimen *ex vivo* (WSSₑᵥ^{m}) = 1.45 cm
Measured length of the surgical specimen *ex vivo* (LSSₑᵥ^{m}) = 4 cm
Measured width of the lesion *ex vivo* (WLₑᵥ^{m}) = 0.45 cm
Measured length of the lesion *ex vivo* (LLₑᵥ^{m}) = 0.9 cm
Measured width of the histological margin *ex vivo* (WHMₑᵥ^{m}) = 0.435 cm
Measured length of the histological margin *ex vivo* (LHMₑᵥ^{m}) = 1.45 cm

The judge uses the method of the present invention in order to see if the hospital is at all liable and the following *in vivo* measurements are obtained:
Estimated width of the surgical specimen *in vivo* (WSSᵢᵥ^{e}) = 1.65 cm
Estimated length of the surgical specimen *in vivo* (LSSᵢᵥ^{e}) = 4.8 cm
Estimated width of the surgical margin *in vivo* (WSMᵢᵥ^{e}) = 0.57 cm
Estimated length of the surgical margin *in vivo* (LSMᵢᵥ^{e}) = 1.89 cm
Estimated width of the histological margin *in vivo* (WHMᵢᵥ^{e}) = 0.50 cm
Estimated length of the histological margin *in vivo* (LHMᵢᵥ^{e}) = 1.77 cm

Therefore, it is determined that 0.5 cm minor lateral histological margin had been achieved and the center where the surgery took place cannot be held liable.

## Claims

1. A method for estimating the magnitude of shrinkage of a surgical specimen excised from the skin of a patient, wherein the surgical specimen adopts an essentially planar shape defined by the length and width dimensions thereof, **characterized in that** it comprises the following steps:
- measuring the length and width of the surgical specimen in the *ex vivo* state (LSS_{EV}^{m}, WSS_{EV}^{m}) excised from a patient after a process of fixing said surgical specimen; and
- estimating the length and width of the surgical specimen in the *in vivo* state (LSS_{IV}^{e}, WSS_{IV}^{e}) before excision by means of the following formulas:
${{LSS}_{IV}}^{e} = {{LSS}_{EV}}^{m} \times \left(1+{LCF}^{SS}\right)$ ${{WSS}_{IV}}^{e} = {{WSS}_{EV}}^{m} \times \left(1+{WCF}^{SS}\right)$ wherein LCF^{SS} is a length-correction factor of the specimen and WCF^{SS} is a width-correction factor of the specimen,
and wherein the value of correction factors LCF^{SS} and WCF^{SS} depends on the location in the body of the patient from whom the surgical specimen was excised according to the following table, wherein the value of correction factors LCF^{SS} and WCF^{SS} may vary by 10% with respect to the values of the table:
| **Region of the body** | **WCF^{SS}** | **Region of the body** | **LCF^{SS}** |
|---|---|---|---|
| Auricle | 0.2385 | Anterior torso | 0.2372 |
| Cervical region | 0.1519 | Posterior torso | 0.2009 |
| Posterior torso | 0.1407 | Upper limb | 0.1911 |
| Scalp | 0.1382 | Lower limb | 0.1876 |
| Anterior torso | 0.1335 | Cheek, chin, and lip | 0.1683 |
| Lower limb | 0.1288 | Cervical region | 0.1625 |
| Frontal region | 0.1194 | Auricle | 0.1427 |
| Cheek, chin, and lip | 0.1140 | Frontal region | 0.1324 |
| Upper limb | 0.0953 | Nose | 0.1243 |
| Nose | 0.0708 | Scalp | 0.1067 |
| Palm or sole | 0.0101 | Palm or sole | 0.0799 |

2. The method according to claim 1, which further allows the magnitude of the swelling of the cutaneous surgical defect caused by excising said surgical specimen to be estimated by means of the following additional steps:
- measuring the length and width of the surgical specimen in the *in vivo* state (LSS_{IV}^{m}, WSS_{IV}^{m}) before being excised from the patient; and
- estimating the length and width of the surgical defect (LSD, WSD) due to the swelling of the skin of the patient after excising the surgical specimen by means of the following formulas:
$LSD = {{LSS}_{IV}}^{m} \times \left(1+{LCF}^{SD}\right)$ $WSD = {{WSS}_{IV}}^{m} \times \left(1+{WCF}^{SD}\right)$ wherein LCF^{SD} is a length-correction factor of the surgical defect and WCF^{SD} is a width-correction factor of the surgical defect,
and wherein the value of correction factors LCF^{SD} and WCF^{SD} depends on the location of the surgical specimen in the body of the patient according to the following table, wherein the value of correction factors LCF^{SD} and WCF^{SD} may vary by 10% with respect to the values of the table:
| **Region of the body** | **WCF^{SD}** | **Region of the body** | **LCF^{SD}** |
|---|---|---|---|
| Upper limb | 0.2189 | Posterior torso | 0.0680 |
| Posterior torso | 0.1733 | Anterior torso | 0.0571 |
| Anterior torso | 0.1283 | Cheek, chin, and lip | 0.0298 |
| Lower limb | 0.0927 | Lower limb | 0.0234 |
| Scalp | 0.0321 | Palm or sole | 0.0213 |
| Cervical region | 0.0285 | Upper limb | 0.0166 |
| Cheek, chin, and lip | 0.0278 | Frontal region | 0.0159 |
| Palm or sole | 0.0161 | Scalp | 0.0153 |
| Frontal region | 0.0099 | Cervical region | -0.0080 |
| Nose | -0.0389 | Nose | -0.0348 |
| Auricle | -0.0809 | Auricle | -0.0705 |

3. The method according to any of the preceding claims, which further allows the magnitude of the surgical margin respected during excision of said surgical specimen between the outer border of a lesion present in the surgical specimen and the outer border of said surgical specimen to be estimated by means of the following additional steps:
- measuring the length and width of the lesion in the *ex vivo* state (LL_{EV}^{m}, WL_{EV}^{m}) after a process of fixing the surgical specimen; and
- estimating the length and width of the surgical margin in the *in vivo* state (LSM_{IV}^{e}, WSM_{IV}^{e}) respected during excision of the surgical specimen by means of the following formulas:
${{LSM}_{IV}}^{e} = \left[{{LSS}_{EV}}^{m}\times \left(1+{LCF}^{SS}\right)-{{LL}_{EV}}^{m}\times \left(1+{LCF}^{L}\right)\right] / 2$ ${{WSM}_{IV}}^{e} = \left[{{WSS}_{EV}}^{m}\times \left(1+{WCF}^{SS}\right)-{{WL}_{EV}}^{m}\times \left(1+{WCF}^{L}\right)\right] / 2$ wherein LCF^{L} is a length-correction factor of the lesion and WCF^{L} is a width-correction factor of the lesion,
and wherein the value of correction factors LCF^{L} and WCF^{L} depends on the location of the surgical specimen in the body of the patient according to the following table, wherein the value of correction factors LCF^{L} and WCF^{L} may vary by 10% with respect to the values of the table:
| **Region of the body** | **WCF^{L}** | **Region of the body** | **LCF^{L}** |
|---|---|---|---|
| Cervical region | 0.2301 | Anterior torso | 0.2225 |
| Frontal region | 0.1968 | Frontal region | 0.1642 |
| Palm or sole | 0.1519 | Lower limb | 0.1519 |
| Lower limb | 0.1385 | Nose | 0.1501 |
| Anterior torso | 0.1349 | Posterior torso | 0.1418 |
| Cheek, chin, and lip | 0.1256 | Upper limb | 0.1412 |
| Nose | 0.1252 | Cervical region | 0.1329 |
| Posterior torso | 0.1210 | Palm or sole | 0.1262 |
| Auricle | 0.0958 | Scalp | 0.1229 |
| Upper limb | 0.0746 | Auricle | 0.1205 |
| Scalp | 0.0507 | Cheek, chin, and lip | 0.1130 |

4. The method according to any of the preceding claims, which further allows the magnitude of the histological margin respected during excision of said surgical specimen between the real outer border of the lesion present in the surgical specimen and the outer border of said surgical specimen to be estimated by means of the following additional steps:
- measuring the length and width of the histological margin in the *ex vivo* state (LHMₑᵥ^{m}, WHMₑᵥ^{m}) after the process of fixing the surgical specimen; and
- estimating the length and width of the histological margin in the *in vivo* state (LHM_{IV}^{e}, WHM_{IV}^{e}) respected during excision of the surgical specimen by means of the following formulas: ${{WHM}_{iv}}^{e} = \left(2\times {{WSM}_{iv}}^{e}\times {{WHM}_{ev}}^{m}\right) / \left({{WSS}_{ev}}^{m}-{{WL}_{ev}}^{m}\right)$ ${{LHM}_{iv}}^{e} = \left(2\times {{LSM}_{iv}}^{e}\times {{LHM}_{ev}}^{m}\right) / \left({{LSS}_{ev}}^{m}-{{LL}_{ev}}^{m}\right) .$
